# EUROPÄISCHE PATENTSCHRIFT

(11) **EP 0 691 478 B1**
(45) Veröffentlichungstag und Bekanntmachung des Hinweises auf die Patenterteilung: **18.08.1999**
(21) Anmeldenummer: 95108398.9
(22) Anmeldetag: 31.05.1995
(51) Int. Cl.: F16B 12/14, F16B 12/20, F16B 19/02, F16B 21/02

(54) **Befestigungsvorrichtung für ein mit einer Befestigungsbohrung versehenes Beschlagteil, vorzugsweise für ein Scharnierteil**
Fastening device for a fitting, preferably a hinged element, comprising a fastening bore
Dispositif de fixation pour une ferrure ayant un alésage, en particulier pour un élément de charnière

(30) Priorität: 08.07.1994 DE 4424151; 26.10.1994 DE 4438285; 14.12.1994 DE 9420033 U
(43) Veröffentlichungstag der Anmeldung: 10.01.1996
(73) Patentinhaber: Arturo Salice S.p.A., I-22060 Novedrate (Como) (IT)
(72) Erfinder:
(74) Vertreter: Gossel, Hans K., Dipl.-Ing.

(56) Entgegenhaltungen:
- DE-A- 2 146 072
- DE-A- 4 124 727
- DE-C- 3 338 976
- DE-U- 9 200 911
- DE-U- 9 307 086
- F & M. FEINWERKTECHNIK MIKROTECHNIK MESSTECHNIK, Bd. 100, Nr. 8, 1.August 1992, MÜNCHEN, DE, Seiten 357-362, XP000311999 NOLL T: "BAUGRUPPEN JUSTIERBAR BEFESTIGEN"

## Beschreibung

Die Erfindung betrifft eine Befestigungsvorrichtung für ein mit einer Befestigungsbohrung versehenes Beschlagteil , vorzugsweise für ein Scharnierteil, mit einer in ein vorgebohrtes Loch einsetzbaren Buchse, in deren axial verlaufendem, durchgehenden Loch ein die Befestigungsbohrung durchsetzender, mit einem Kopf versehener Stift drehbar gelagert ist, nach dem Oberbegriff des Patentanspruches 1.

Befestigungsvorrichtungen dieser Art sind in unterschiedlichen Ausführungsformen bekannt und bestehen meist aus einer in ein vorgebohrtes Loch einsetzbaren, dübelartigen Buchse, die durch Drehung des mit einem Spreizteil versehenen Stifts zu ihrer Verankerung in dem Loch gespreizt wird. Aus dem DE-GM 93 07 086 ist eine derartige Befestigungsvorrichtung bekannt, bei der die dübelartige Buchse mit einer Befestigungsplatte des Beschlagteils verbunden ist, so daß sie erst bei einer Montage des Beschlagteils in das vorgebohrte Loch eingesetzt wird.

Bei einem aus der DE-PS 41 24 727 bekannten Befestigungsvorrichtung der eingangs angegebenen Art wird ebenfalls eine dübelartige Buchse, die zur besseren Verankerung mit Metallteilen versehen sein kann, in ein vorgebohrtes Loch eingesetzt, wobei die Buchse zu ihrer kraft- und formschlüssigen Verankerung in dem Loch durch etwa eine Vierteldrehung einer abgeflachten Schraube gespreizt wird.

Bei der Demontage der Beschlagteile, beispielsweise zum Zwecke der Entsorgung der mit diesen versehenen Möbelteile, verbleibt jedoch grundsätzlich die Buchse in dem vorgebohrten Loch, so daß eine sortenreine Trennung der Bestandteile, wie sie bei einer umweltschonenden Entsorgung erwünscht ist, nicht möglich ist.

Aus der DE-U-9 200 911 ist eine Befestigungsvorrichtung mit einem Schraubbolzen bekannt, der in einer exzentrischen Bohrung eines Zapfen gehaltert ist und der einen zylindrischen Schaft aufweist, der an seinem unteren Ende einen radialen Ansatz trägt. Der Zapfen muß mit einer schlüssellochförmigen Bohrung versehen werden, deren zylindrischer Bohrungsteil exzentrisch zur Achse der Buchse angeordnet ist, um den radialen Fortsatz durch die Bohrung des Zapfens hindurchschieben zu können.

Die Befestigungsvorrichtung erfordert allerdings einen aufwendigen Aufbau und weist aufgrund des radialen Ansatzes des Schraubbolzens und der schlüsselförmigen Bohrung in dem Zapfen nur eine geringe Festigkeit auf, da der radiale Ansatz bei seinem Eindringen in die Wandung der Befestigungsbohrung bestrebt ist, den Schaft des Bolzens in radialer Richtung in Richtung auf das Schlüssellochteil der Bohrung des Zapfens zu verschieben.

Aufgabe der Erfindung ist es, ein wirtschaftlich herstellbares Befestigungselement der eingangs angegebenen Art zu schaffen, das sich einfach und schnell mit festem Sitz montieren läßt und eine leichte und rückstandslose Demontage ermöglicht.

Diese Aufgabe wird durch die Merkmale des Patentanspruchs 1 gelöst. Die erfindungsgemäße Lösung besteht darin, daß das durchgehende Loch exzentrisch in der Buchse oder einem ringförmigen Einsatzteil angeordnet ist und daß der Stift mit einem das Loch überragenden, exzentrischen Schaftteil versehen ist, an dem mindestens eine Scheibe befestigt ist und daß die Exzentrizitäten der Buchse bzw. der Einsatzteile und des Schaftteils derart aufeinander abgestimmt sind, daß die Scheibe in einer Drehstellung des Stifts konzentrisch zu der Buchse bzw. dem Einsatzteil ist oder mit diesem fluchtet und in einer anderen Drehstellung das Einsatzteil bzw. die Buchse radial überragt.

Bei einem erfindungsgemäßen Befestigungselement sind bereits vor der Montage das ringförmige Einsatzteil und der Klemmteil durch den Stift mit dem Beschlagteil verbunden. Zur Montage der Befestigungsvorrichtung wird der Stift in eine Stellung gedreht, in der die beiden Exzentrizitäten derart zueinander ausgerichtet sind, daß das Klemmteil in axialer Draufsicht das Einsatzteil nicht überragt, so daß die Buchse oder das ringförmige Einsatzteil behinderungsfrei in das dem Durchmesser des Einsatzteils entsprechende Loch eingesetzt werden kann. Durch Drehung des Stiftes wird dann aufgrund der beiden Exzentrizitäten das Klemmteil aus der zylindrischen Hüllkontur des Einsatzteils in radialer Richtung herausbewegt, so daß es kraft- und/oder formschlüssig zur Verankerung der Befestigungsvorrichtung an der Wandung des Loches angreift. Um den Stift zur Verankerung der Befestigungsvorrichtung drehen zu können, ist dessen Kopf mit einem Schlitz oder Kreuzschlitz versehen. Die Verankerung kann durch eine Drehung des Stifts bis zu etwa 180 Grad erfolgen.

Zweckmäßigerweise besteht das Klemmteil mindestens aus einer Scheibe. Dabei sind die Exzentrizitäten des Einsatzteils und des Schaftteils zweckmäßigerweise derart aufeinander abgestimmt, daß die Scheibe in einer Drehstellung des Stifts konzentrisch zu dem Einsatzteil ist oder mit diesem fluchtet und in einer anderen Drehstellung das Einsatzteil radial überragt.

Die erfindungsgemäße Befestigungsvorrichtung läßt sich nicht nur einfach und schnell montieren, weil sich das Einsatzteil mit in dessen Hüllzylinder befindlichem Klemmteil oder befindlicher Scheibe behinderungsfrei in ein vorgebohrtes Loch einsetzen läßt, sondern durch einfache Rückdrehung des Stiftes auch wieder entfernen, weil durch diese Rückdrehung das Klemmteil und die Scheibe in den Hüllzylinder des Einsatzteils zurückbewegt werden und dadurch die Klemmung vollständig aufgehoben wird.

Zweckmäßigerweise ist die Scheibe mit mindestens einer unlaufenden, schneidenartigen Kante versehen. Auf dem exzentrischen Schaftteil können auch mehrere Scheiben mit umlaufenden Schneidkanten gelagert sein.

Nach einer erfinderischen Weiterbildung ist vorgesehen, daß die Scheibe mit mindestens einem schneidenartigen, wendelförmigen Gewindegang versehen ist. Durch diese Ausgestaltung ist sichergestellt, daß sich bei der Drehung des Stiftes der oder die Gewindegänge in die Seitenwand des Loches einschneiden und durch die Drehung des Stiftes die Befestigungsvorrichtung in das Loch hineinziehen, wodurch ein besonders guter und fester Sitz des Beschlagteils erreicht wird.

Das exzentrische Schaftteil besitzt zweckmäßigerweise einen kleineren Durchmesser als das in der Buchse gelagerte Schaftteil des Stifts. Das exzentrische Schaftteil kann mit der Scheibe vernietet oder aber auch mit einem Gewinde versehen und dadurch mit der Scheibe verschraubt sein.

In weiterer Ausgestaltung der Erfindung ist vorgesehen, daß der Kopf mit einem radialen Fortsatz oder Vorsprung versehen ist, der mit mindestens einem Gegenanschlag im äußeren Randbereich der Befestigungsbohrung des Beschlagteils zusammenwirkt. Durch entsprechende Anschläge ist sichergestellt, daß der Stift bei seiner Spannung nicht überdreht und bei der Demontage nicht weiter zurückgedreht werden kann, als es der Lösung der Klemmverbindung entspricht. Zweckmäßigerweise sind der Fortsatz und der Gegenanschlag derart angeordnet, daß sie eine Drehung des Stifts von etwa 180 Grad zulassen.

In weiterer Ausgestaltung der Erfindung ist vorgesehen, daß der Fortsatz ein nasenförmiger Vorsprung ist, der in einer sektorartigen Vertiefung eines aus Blech oder Guß bestehenden Halteteils des Beschlagteils angeordnet ist. Dieser Vorsprung kann gleichzeitig auch als Zeiger dienen, der bei der Montage bzw. Demontage anzeigt, ob sich das Befestigungselement in seiner verspannten oder entriegelten Stellung befindet.

Der Fortsatz kann auch ein zu dem Kopf konzentrischer, sektorartig verbreiterter Randbereich sein, dessen stufenartige Übergänge zu dem Umfangsrand des Kopfes die Anschläge bilden.

Die die Klemmteile bildenden Scheiben können im Querschnitt zur Ausbildung der Scheiben trapezförmig sein. Zweckmäßigerweise besitzen die Scheiben im wesentlichen denselben Durchmesser wie die Buchse.

Die Befestigung der Scheibe auf dem exzentrischen Schaft wird zweckmäßigerweise derart an die Anschlagstellungen angepaßt, daß die Scheibe bei dem Anliegen einer Seite des Fortsatzes an einem Anschlag in axialer Richtung mit der Buchse fluchtet und bei dem Anliegen der anderen Seite des Fortsatzes an dem anderen Anschlag radial ausgefahren ist.

Nach einer besonderen Ausführungsform der Erfindung ist vorgesehen, daß der Stift aus zwei Schaftteilen unterschiedlicher Durchmesser besteht, die jeweils exzentrische Schaftteile besitzen, und daß die Schaftteile exzentrische Bohrungen von ringförmigen Einsatzteilen durchsetzen und auf den exzentrischen Schaftteilen die Klemmkörper oder -scheiben gehaltert sind. Durch diese Ausgestaltung der Erfindung wird eine besonders gute Verankerung des Befestigungselements in der Bohrung erreicht, da die die Klemmung bewirkenden Einrichtungen doppelt vorgesehen sind. Die die Klemmung bewirkenden Körper oder Scheiben sind in größerem axialen Abstand voneinander vorgesehen, was eine bessere Verankerung in der Bohrung bewirkt.

Nach einer erfinderischen Weiterbildung ist vorgesehen, daß der Schaft statt mit einem Kopf mit einem oberhalb der Befestigungsbohrung befindlichen Hebel verbunden ist. Dieser Hebel läßt sich ohne ein Werkzeug von Hand in die Klemmstellung und bei der Demontage auch wieder in die Öffnungsstellung bewegen.

Um den Hebel im montierten Zustand nicht unansehnlich in Erscheinung treten zu lassen, ist vorgesehen, daß der Hebel aus einem Plattenteil besteht, daß in der Schließstellung Teile des Beschlagteils, z. B. einen Befestigungsflansch, kantengleich überdeckt.

Um die Buchse lagerichtig, d. h. in der Montagestellung, fluchtend mit den vorgebohrten Löchern auszurichten, ist in weiterer Ausgestaltung der Erfindung vorgesehen, daß die Buchse mit einem Flansch versehen ist, der mit einem radialen Vorsprung in einer Bördelecke eines Plattenteils des Beschlagteils undrehbar gehalten ist.

Um in einfacher Weise eine Verstellung des durch die Befestigungsvorrichtung befestigten Beschlagteils zu ermöglichen, ist nach einer besonders bevorzugten Ausführungsform der Erfindung vorgesehen, daß der in der Buchse gelagerte Schaftteil des Stifts mit einem Gewinde versehen ist, das selbstschneidend in die Wandung der Bohrung der Buchse eingreift oder in ein Innengewinde der Bohrung eingeschraubt ist, und daß die Befestigungsbohrung des Beschlagteils ein Langloch ist. Bei der dieser Befestigungsvorrichtung wird gleichzeitig mit der Drehung des Stifts um etwa eine halbe Drehung auch der Schaft des Stifts in die Buchse eingeschraubt, so daß er das zu befestigende Beschlagteil fest in Anlage an ein Möbelteil o. dgl. zieht, das mit dem vorgebohrten Loch zum Einsetzen in der Buchse versehen ist. Wird nun der Stift der erfindungsgemäßen Befestigungsvorrichtung um einen unter 180° liegenden Winkel zurückgedreht, so greift das Klemmteil noch immer kraft- und/oder formschlüssig an der Bohrungswandung an, so daß die Befestigungsvorrichtung noch nicht vollständig gelöst ist, wobei sich jedoch der haltende Kopf des Stifts aufgrund des Herausschraubens des Schaftteil soweit von dem zu befestigenden Beschlagteil entfernt, daß dieses entsprechend der Länge des Langloches zu seiner Einstellung verschoben werden kann, bevor es durch erneutes Festziehen des Stifts festgelegt wird. Dabei ist die Steigung des Gewindes so zu wählen, daß der Stift durch eine Drehung, die kleiner ist als 180°, zwischen seiner den Beschlagteil fixierenden Stellung und seiner vormontierten Stellung bewegbar ist, in der sich das Beschlagteil noch über die Länge des Langloches verschieben läßt.

Nach einer bevorzugten Ausführungsform ist vorgesehen, daß zwei dübelartige Buchsen mit einer Unterplatte verbunden sind, auf der ein die Unterplatte zumindest teilweise überdeckendes plattenförmiges Beschlagteil befestigt ist, das mit zwei von den Stiften durchsetzten Langlöchern mit einer gemeinsamen Mittellinie versehen ist. Bei diese Ausgestaltung läßt sich das Beschlagteil, das beispielsweise aus einer Montageplatte für den Scharnierarm eines Möbelscharniers bestehen kann, in Richtung der miteinander fluchtenden Langlöcher verschieben.

Zweckmäßigerweise sind die Buchsen mit kraftschlüssig an den Rändern der Langlöcher anliegenden kragenartigen Vorsprüngen versehen, so daß die Vorsprünge mit gewissen Preßsitz an den Rändern der Langlöcher anliegen und die Unterplatte mit dem Beschlagteil, beispielsweise der Montageplatte, kraftschlüssig verbunden bleibt.

Die kragenartigen Vorsprünge können im wesentlichen nur auf quer zu der Mittellinie liegenden Seiten der Langlöcher angeordnet sein, so daß nur die Seiten der auf gegenüberliegenden Seiten der Bohrung befindlichen Teile der kragenartigen Vorsprünge an den Seitenrändern der Langlöcher anliegen. Dadurch kann die Breite der Durchmesser der Langlöcher im wesentlichen der Breite des oberen Schaftteils des Stifts entsprechen.

Zweckmäßigerweise stützen sich die Buchsen mit den Stirnseiten sockelartiger Erhöhungen auf der Unterseite des plattenförmigen Beschlagteils ab. Dadurch wird eine gute Fixierung des zu befestigenden Beschlagteils erreicht. Das Beschlagteil bzw. die Montageplatte kann mit einem umlaufenden gegen das Möbelteil abgewinkelten Rand versehen sein, der etwa der Höhe der sockelartigen Erhöhungen entspricht und mit dem das plattenförmige Beschlagteil die Unterplatte übergreift.

Das Klemmteil ist zweckmäßigerweise eine Scheibe.

In weiterer Ausgestaltung der Erfindung ist vorgesehen, daß der Durchmesser der Scheibe größer ist als der Durchmesser des mit dem Gewinde versehenen Schaftteils. Zweckmäßigerweise entspricht der Durchmesser der Scheibe dem Außendurchmesser der Buchse.

Dabei sind die Exzentrizitäten der Buchse und des Schaftteils zweckmäßigerweise derart aufeinander abgestimmt, daß die Scheibe in einer Drehstellung des Stifts konzentrisch zu der Buchse ist oder mit dieser fluchtet und in einer anderen Drehstellung die Buchse radial überragt. Die erfindungsgemäße Befestigungsvorrichtung läßt sich nicht nur einfach und schnell montieren, weil sich die Buchse mit in dessen Hüllzylinder befindlichem Klemmteil oder befindlicher Scheibe behinderungsfrei in ein vorgebohrtes Loch einsetzen läßt, sondern durch einfache Rückdrehung des Stifts auch wieder entfernen läßt, weil durch diese Rückdrehung das Klemmteil und die Scheibe in den Hüllzylinder der Buchse zurückbewegt werden und dadurch die Klemmung vollständig aufgehoben wird.

Zweckmäßigerweise ist die Scheibe mit mindestens einer umlaufenden, schneidenartigen Kante versehen. Auf den exzentrischen Schaftteil können auch mehrere Scheiben mit umlaufenden Schneidkanten gelagert sein.

Nach einer vorteilhaften Ausgestaltung ist vorgesehen, daß die Scheibe mit mindestens einem schneidenartigen, wendelförmigen Gewindegang versehen ist. Nach dieser Ausgestaltung ist sichergestellt, daß sich bei der Drehung des Stifts der oder die Gewindegänge in die Seitenwand des vorgebohrten Loches einschneiden und durch die Drehung des Stifts die Befestigungsvorrichtung in das Loch hineinziehen, wodurch ein besonders guter und fester Sitz des Beschlagteils erreicht wird.

Das exzentrische Schaftteil besitzt zweckmäßigerweise einen kleineren Durchmesser als das in der Buchse gelagerte Schaftteil des Stifts. Das exzentrische Schaftteil kann mit der Scheibe vernietet oder aber auch mit einem Gewinde versehen und dadurch mit der Scheibe verschraubt sein.

Nach einer vorteilhaften Ausgestaltung ist vorgesehen, daß der mit dem Gewinde versehene Schaftteil des Stifts zwischen dem Kopf und der Scheibe länger ist, als die Länge der Buchse einschließlich der Vorsprünge. Zweckmäßigerweise ist das Schaftteil um etwa die Hälfte der Gewindesteigung länger als die Buchse, so daß der Stift durch eine Drehung, die unter einer halben Drehung liegt, zwischen seiner gelösten und seiner fixierten Stellung gedreht werden kann. Wird der Stift in seiner Öffnungsstellung zurückgedreht, so liegt die Scheibe in der Öffnungsstellung innerhalb der Hüllkontur der Buchse an deren unteren Rand an, so daß ein unerwünschtes Überdrehen vermieden ist.

Nach einer weiteren Ausführungsform wird die Aufgabe bei einer Befestigungsvorrichtung der gattungsgemäßen Art erfindungsgemäß dadurch gelöst, daß das durchgehende Loch exzentrisch in der Buchse angeordnet ist und daß der Stift mit einem endseitigen Schaftteil versehen ist, an dem ein Klemmteil exzentrisch und undrehbar befestigt ist.

Bei dieser erfindungsgemäßen Befestigungsvorrichtung sind bereits vor der Montage die Buchse und das Klemmteil durch den Stift mit dem zu befestigenden Beschlagteil verbunden. Zur Montage der Befestigungsvorrichtung wird der Stift in eine Stellung gedreht, in der die beiden Exzentrizitäten derart zueinander ausgerichtet sind, daß das Klemmteil in axialer Draufsicht das Einsatzteil nicht überragt, so daß die Buchse behinderungsfrei in das ihrem Durchmesser entsprechende Loch eingesetzt werden kann. Durch Drehung des Stifts wird dann aufgrund der beiden Exzentrizitäten das Klemmteil aus der zylindrischen Hüllkontur der Buchse in radialer Richtung herausbewegt, so daß es kraft- und/oder formschlüssig zur Verankerung der Befestigungsvorrichtung an der Wand des vorgebohrten Loches angreift. Um den Stift zur Verankerung der Befestigungsvorrichtung drehen zu können, ist dessen Kopf mit einem Schlitz oder Kreuzschlitz versehen. Die Verankerung kann durch eine Drehung des Stifts bis zu etwa 180° erfolgen. Zweckmäßigerweise besteht das Klemmteil mindestens aus einer Scheibe mit einer exzentrischen Bohrung. Dabei sind die Exzentrizitäten der Buchse und der Bohrung zweckmäßigerweise derart aufeinander abgestimmt, daß die Scheibe in einer Drehstellung des Stifts konzentrisch zu dem Einsatzteil ist oder mit diesem fluchtet und in einer anderen Drehstellung das Einsatzteil radial überragt. Der Durchmesser der Scheibe ist zweckmäßigerweise gleich dem Durchmesser der Buchse. Der Durchmesser der Scheibe kann auch kleiner sein als der Durchmesser der Buchse.

Die erfindungsgemäße Befestigungsvorrichtung läßt sich nicht nur einfach und schnell montieren, weil sich die Buchse mit deren Hüllzylinder befindlichen Klemmteil oder befindlicher Scheibe behinderungsfrei in ein vorgebohrtes Loch einsetzen läßt, sondern durch einfache Rückdrehung des Stifts auch wieder entfernen läßt, weil durch diese Rückdrehung das Klemmteil oder die Scheibe in den Hüllzylinder der Buchse zurückbewegt werden und dadurch die Klemmung vollständig aufgehoben wird.

Zweckmäßigerweise ist die Scheibe mit mindestens einer umlaufenden, schneidenartigen Kante versehen. Auf dem Schaftteil können auch mehrere Scheiben mit umlaufenden Schneidkanten gelagert sein. Nach einer erfinderischen Weiterbildung ist vorgesehen, daß die Scheibe mit mindestens einem schneidenartigen, wendelförmigen Gewindegang versehen ist. Durch diese Ausgestaltung ist sichergestellt, daß sich bei der Drehung des Stifts der oder die Gewindegänge die Seitenwand des vorgebohrten Loches einschneiden und durch die Drehung des Stifts die Befestigungsvorrichtung in das Loch hineinziehen, wodurch ein besonders guter und fester Sitz des Beschlagteils erreicht wird.

Das die Scheibe mit der exzentrischen Bohrung tragende Schaftteil besitzt zweckmäßigerweise einen kleineren Durchmesser als das in der Buchse gelagerte Schaftteil des Stifts. Das Schaftteil kann mit der Scheibe vernietet oder aber auch mit einem Gewinde versehen und dadurch mit der Scheibe verschraubt sein.

Zweckmäßigerweise weist die Bohrung der Scheibe mindestens im Bereich des Nietkopfs des Schaftteils ein polygones Profil auf. Wird die Scheibe durch Vernietung des Endes des Schaftteils mit diesem verbunden, wird der Schaftteil gestaucht, so daß er sich verbreitert und im wesentlichen etwa eine zu dem polygonen Profil der Bohrung komplementäre Form annimmt, so daß nicht nur eine kraftschlüssige, sondern darüberhinaus auch eine formschlüssige Verbindung der Scheibe mit dem Schaftteil erreicht wird.

Zweckmäßigerweise ist das endseitige Ende der Buchse mit einem axialen Fortsatz versehen, dessen Seitenanschläge für einen radialen Fortsatz des Stifts bilden. Die Fortsätze sowohl der Buchse als auch des Stifts können sektorartig ausgebildet sein. Der radiale Fortsatz des Stifts kann sich zweckmäßigerweise am oberen Endbereich der Scheibe befinden.

Die die Fortsätze bildenden Anschläge werden zweckmäßigerweise derart angeordnet und ausgebildet, daß sie eine Drehung des Stifts in der Buchse um etwa 180° zulassen, um die gegebenen Exzentrizitäten voll auszunutzen.

Nach einer besonders vorteilhaften Ausführungsform ist vorgesehen, daß der in der Buchse gelagerte Schaftteil des Stifts mit einem Gewinde versehen ist, das selbstschneidend in die Wandung der Bohrung der Buchse eingreift oder in ein Innengewinde der Buchse eingeschraubt ist. Diese Ausführungsform ermöglicht es, durch Herausschrauben des Stifts aus der Buchse das zu befestigende Beschlagteil zu lockern, so daß es relativ zu dem Schaft des Stifts bewegt werden kann, wenn zwischen dem Schaft und der Befestigungsbohrung ein ausreichendes Spiel vorhanden ist.

Zweckmäßigerweise ist die Befestigungsbohrung des Beschlagteils ein Langloch, so daß eine Verstellung des Beschlagteils möglich ist.

Bei der bevorzugten Ausführungsform der erfindungsgemäßen Befestigungsvorrichtung wird also gleichzeitig mit der Drehung des Stifts um etwa eine halbe Drehung auch der Schaft des Stifts in die Buchse eingeschraubt, so daß er das zu befestigende Beschlagteil fest in Anlage an ein Möbelteil o. dgl. zieht, das mit dem vorgebohrten Loch zum Einsetzen der Buchse versehen ist. Wird nun der Stift um einen unter 180° liegenden Winkel zurückgedreht, so greift das Klemmteil noch immer kraft- und/oder formschlüssig an der Bohrungswandung an, so daß die Befestigungsvorrichtung noch nicht vollständig gelöst ist, wobei sich jedoch der halternde Kopf des Stifts aufgrund des Herausschraubens des Schaftteils soweit von dem zu befestigenden Beschlagteil entfernt, das dieses entsprechend der Länge des Langloches zu seiner Einstellung verschoben werden kann, bevor es durch erneutes Festziehen des Stifts festgelegt wird. Dabei ist die Steigung des Gewindes so zu wählen, daß der Stift durch eine Drehung, die kleiner als 180° ist, zwischen seiner den Beschlag fixierenden Stellung und seiner vormontierten Stellung bewegbar ist, in der sich das Beschlagteil noch über die Länge des Langloches verschieben läßt.

Nach einer vorteilhaften Ausgestaltung ist vorgesehen, daß der mit dem Gewinde versehene Schaftteil des Stifts zwischen dem Kopf und der Scheibe länger ist als die Länge der Buchse einschließlich der Vorsprünge. Zweckmäßigerweise ist das Schaftteil um etwa die Hälfte der Gewindesteigung länger als die Buchse, so daß der Stift durch eine Drehung, die unter einer halben Drehung liegt, zwischen seiner gelösten und seiner fixierten Stellung gedreht werden kann. Wird der Stift in seine Öffnungsstellung zurückgedreht, so liegt die Scheibe in der Öffnungsstellung innerhalb der Hüllkontur der Buchse an deren unteren Rand an, so daß ein unerwünschtes Überdrehen vermieden wird.

Bei der Montage der erfindungsgemäßen Befestigungsvorrichtung mit in die exzentrische Bohrung der Buchse eingeschraubtem Stift ist zu beachten, daß die Hüllkontur der Scheibe mit dem zylindrischen Mantel der Buchse fluchtet, wenn der Stift so weit aus der Buchse herausgedreht ist, daß er durch eine Drehung von etwa 180° festgezogen werden kann. Dieser Montagezustand läßt sich bei der erfindungsgemäßen Befestigungsvorrichtung leicht dadurch erreichen, daß der Stift in der erforderlichen Weise in die Buchse eingeschraubt wird und anschließend die Vernietung der Scheibe mit dem gewindelosen Schaftteil des Stifts in einer Lage erfolgt, in der die Umfangskontur der Scheibe konzentrisch zur Buchse ausgerichtet ist oder mit dem Mantel der Buchse fluchtet.

Nach eine bevorzugten Ausführungsform ist vorgesehen, daß zwei dübelartige Buchsen mit einer Unterplatte verbunden sind, auf der ein die Unterplatte zumindest teilweise überdeckendes plattenförmiges Beschlagteil befestigt ist, das mit zwei von den Stiften durchsetzten Langlöchern versehen ist, die auf einer gemeinsamen Mittellinie liegen. Bei dieser Ausgestaltung läßt sich das Beschlagteil, das beispielsweise aus einer Montageplatte für den Scharnierarm eines Möbelscharniers bestehen kann, in Richtung der miteinander fluchtenden Langlöcher verschieben.

Zweckmäßigerweise sind die Buchsen mit kraftschlüssig an den Rändern der Langlöcher anliegenden kragenartigen Vorsprüngen versehen, so daß die Vorsprünge mit gewissen Preßsitz an den Rändern der Langlöcher anliegen und die Unterplatte mit dem Beschlagteil, beispielsweise der Montageplatte, kraftschlüssig verbunden bleibt.

Die kragenartigen Vorsprünge können im wesentlichen nur auf quer zu der Mittellinie liegenden Seiten der Langlöcher angeordnet sein, so daß nur die Seiten der auf gegenüberliegenden Seiten der Bohrung befindlichen Teile der kragenartigen Vorsprünge an den Seitenrändern der Langlöcher anliegen. Dadurch kann die Breite der Durchmesser der Langlöcher im wesentlichen der Breite des oberen Schaftteils des Stifts entsprechen.

Zweckmäßigerweise stützen sich die Buchsen mit den Stirnseiten sockelartiger Erhöhungen auf der Unterseite des plattenförmigen Beschlagteils ab. Dadurch wird eine gute Fixierung des zu befestigenden Beschlagteils erreicht. Das Beschlagteil bzw. die Montageplatte kann mit einem umlaufenden, gegen das Möbelteil abgewinkelten Rand versehen sein, der etwa der Höhe der sockelartigen Erhöhungen entspricht und mit dem das plattenförmige Beschlagteil die Unterplatte übergreift.

Ein Ausführungsbeispiel der Erfindung wird nachstehend anhand der Zeichnung näher erläutert. In dieser zeigt
- Fig. 1: einen Schnitt durch eine erste Ausführungsform einer Befestigungsvorrichtung in ihrer unverspannten, in ein vorgebohrtes Loch eingeschobenen Stellung,
- Fig. 2: die Befestigungsvorrichtung nach Fig. 1 in ihrer verspannten Stellung,
- Fig. 3: eine Unteransicht der Befestigungsvorrichtung nach Fig. 1,
- Fig. 4: eine Draufsicht auf die Befestigungsvorrichtung nach Fig. 1,
- Fig. 5: eine Seitenansicht des Stifts mit mit einem Gewinde versehenen, exzentrischen Schaftteil,
- Fig. 6: eine Unteransicht der Buchse ohne Stift,
- Fig. 7: eine Seitenansicht der mit zwei schneidenden Gewindegängen versehenen Klemmscheibe,
- Fig. 8: einen Schnitt durch eine zweite Ausführungsform der Befestigungsvorrichtung mit einem Stift mit zwei exzentrischen, Klemmscheiben tragenden Schaftteilen in der unverspannten, eingeführten Stellung,
- Fig. 9: eine der Fig. 8 entsprechende Darstellung der Befestigungsvorrichtung im im vorgebohrten Loch verspannten Zustand,
- Fig. 10: eine Unteransicht des Stifts der Befestigungsvorrichtung nach Fig. 8,
- Fig. 11: eine Draufsicht auf das erste ringförmige Einsatzteil,
- Fig. 12: eine Draufsicht auf die erste Klemmscheibe,
- Fig. 13: eine Draufsicht auf das zweite ringförmige Einsatzteil,
- Fig. 14: eine Draufsicht auf die untere Klemmscheibe,
- Fig. 15: eine Seitenansicht des Stifts gemäß Fig. 10,
- Fig. 16: einen Längsschnitt durch eine dritte Ausführungsform einer Befestigungsvorrichtung,
- Fig. 17: einen Längsschnitt durch eine vierte Ausführungsform einer Befestigungsvorrichtung,
- Fig. 18: eine Seitenansicht einer fünften Ausführungsform einer Befestigungsvorrichtung,
- Fig. 19: eine Draufsicht auf die Befestigungsvorrichtung nach Fig. 18,
- Fig. 20: einen Querschnitt durch eine durch die erfindungsgemäße Befestigungsvorrichtung an einem Möbelteil befestigte Befestigungsplatte,
- Fig. 21: einen Teil der Befestigungsplatte nach Fig. 20 in einer Stellung, in der sich die Montageplatte in Richtung des Doppelpfeils A verschieben läßt,
- Fig. 22: eine Seitenansicht des Stifts,
- Fig. 23: eine Seitenansicht der auf dem exzentrischen Schaftteil des Stifts befestigten Scheibe,
- Fig. 24: eine Seitenansicht der Unterplatte der Befestigungsplatte mit dübelförmigen Buchsen,
- Fig. 25: eine Draufsicht auf die Unterplatte nach Fig. 24,
- Fig. 26: eine Draufsicht auf die Montageplatte.
- Fig. 27: einen Querschnitt durch eine erfindungsgemäße Befestigungsvorrichtung, deren mit der Buchse fluchtende Scheibe in der Montagestellung in ein vorgebohrtes Sackloch eines Möbelteils eingeführt ist,
- Fig. 28: eine der Fig. 27 entsprechende Darstellung in der festgezogenen, montierten Stellung der Befestigungsvorrichtung,
- Fig. 29: eine der Fig. 28 entsprechende Darstellung der Befestigungsvorrichtung, bei der jedoch der Stift um einen unter 180° liegenden Winkel zurückgedreht worden ist, um eine Verschiebung des Beschlagteils zu ermöglichen,
- Fig. 30: eine Seitenansicht des Stifts vor seiner Vernietung mit der Klemmscheibe,
- Fig. 31: eine Seitenansicht der Klemmscheibe,
- Fig. 32: eine Draufsicht auf die Klemmscheibe nach Fig. 31,
- Fig. 33: einen vergrößerten Ausschnitt aus Fig. 32,
- Fig. 34: eine Unteransicht der Unterplatte der Befestigungsplatte mit dübelförmigen Buchsen,
- Fig. 35: eine Seitenansicht der Unterplatte nach Fig. 34
- Fig. 36: eine Draufsicht auf die Montageplatte.

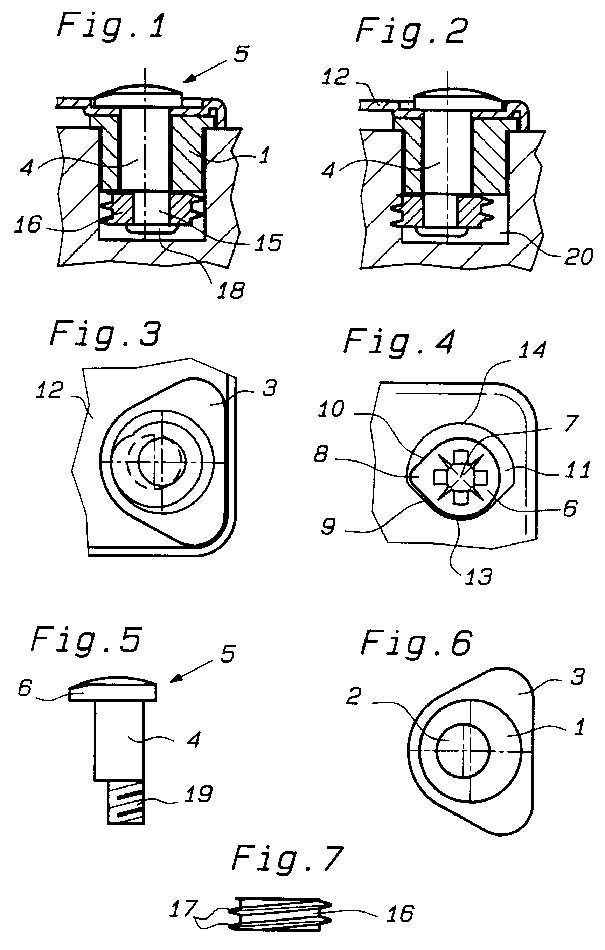

Die aus den Figuren 1 bis 7 ersichtliche erste Ausführungsform einer Befestigungsvorrichtung besteht aus einer zylindrischen Buchse 1 mit einer exzentrischen Durchgangsbohrung 2, deren Exzentrizität aus Fig. 6 ersichtlich ist. Der zylindrische Teil der Buchse 1 ist mit einem oberen, dreieckigen Flansch 3 mit abgerundeten Ecken einstückig verbunden, wobei die Spitze des Dreiecks konzentrisch zu dem zylindrischen Hauptteil 1 abgerundet ist. Die Buchse 1 besteht aus Kunststoff.

In der Bohrung 2 der Buchse 1 ist der zylindrische Schaftteil 4 eines Stifts 5 gelagert. Der zylindrische Schaftteil 4 trägt einen verbreiterten Kopf 6, der mit einem Kreuzschlitz 7 versehen ist. Der im übrigen aus einem kreisscheibenförmigen Teil bestehende Kopf 6 weist einen radialen, nasenförmigen Vorsprung 8 auf, dessen beiden Flanken 9, 10 tangential in den kreisförmigen Umfang des Kopfes 6 einmünden. Der Kopf 6 liegt in einer gestanzten Einziehung 11 eines flanschförmigen Blechteils 12 des Beschlagteils. Die gestanzte Einziehung 11 besitzt zwei zu dem Kopf 6 konzentrische Wandungsteile 13, 14, von denen der Wandungsteil 13 etwa den gleichen Krümmungsradius hat wie der kreisscheibenförmige Teil des Kopfes 6, und der Wandungsteil 14 einen Krümmungsradius besitzt, der dem Fortsatz 8 entspricht. Zwischen den beiden konzentrischen Wandungsteilen sind zwei tangential in den Wandungsteil 13 einmündende, gerade Wandungsabschnitte vorgesehen, die Anschläge für die Flanken 9, 10 des Vorsprungs 8 bilden, so daß der Schaft 6 in der Vertiefung 11 um etwa 180 Grad drehbar gehalten ist.

Der Schaftteil 4 des Stifts 5 ist durch einen exzentrischen Schaftteil 15 fortgesetzt, wobei die Exzentrizität aus den Figuren 1, 2 und 5 ersichtlich ist. Auf dem exzentrischen Schaftteil 15 ist eine ringförmige Stahlscheibe 16 gelagert, die mit zwei wendelförmigen, schneidenden Gewindegängen 17 versehen ist. Das untere Ende des Schaftteils 15 ist mit einem Nietkopf 18 versehen, durch den die Scheibe 16 und die Buchse 11 an dem Flansch 12 gehalten sind.

Bei dem aus Fig. 5 ersichtlichen Stift 5 sind der exzentrische Schaftteil 15 mit einem Gewinde 19 und die Bohrung der Scheibe 16 mit einem Innengewinde versehen, so daß die Scheibe 16 auf das exzentrische Schaftteil 19 aufschraubbar ist.

Um eine lagerichtige Montage der Befestigungsvorrichtung an dem Flansch 12 sicherzustellen, liegt eine abgerundete Ecke des flanschförmigen Randes 3 der Buchse 1 in der aus Fig. 3 ersichtlichen Weise in einem gebördelten Eckbereich des Flansches 12, wobei der die Ecken verbindende gerade Bereich an einem geraden Abschnitt des Bördelrandes anliegt.

In der aus Fig. 1 ersichtlichen Einschubstellung sind die Exzentrizitäten der Bohrung 2 und des Schafts 15 derart zueinander ausgerichtet, daß die schneidenförmigen Gänge 17 auf dem verlängerten Hüllzylinder der Buchse 1 liegen und die Buchse 1 mit der fluchtenden Scheibe 16 behinderungsfrei in das entsprechend angepaßte, vorgebohrte Loch 20 eingeschoben werden kann.

Aus Fig. 2 ist der Stift in seiner um 180 Grad gedrehten Verriegelungsstellung ersichtlich, in der sich die schneidenden Gewindegänge 17 in einen Teil der Wandung der Bohrung 20 eingeschnitten haben. Da die Gewindegänge 17 wendelförmig angeordnet sind, wird durch die Drehung des Stiftes 5 die Befestigungsvorrichtung in das Loch 20 hineingezogen.

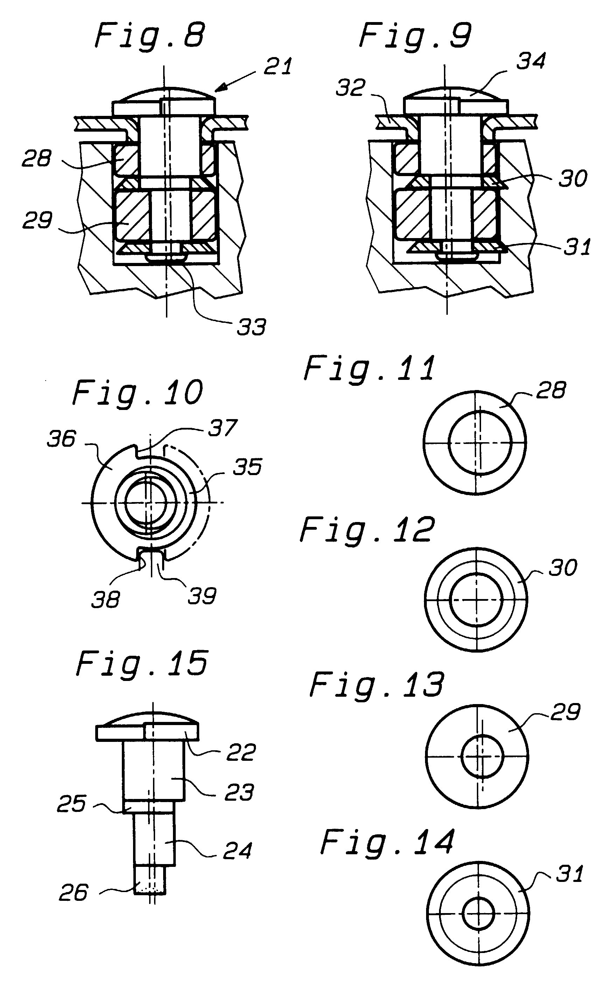

Anhand der Figuren 8 bis 14 wird nun eine zweite Ausführungsform der Befestigungsvorrichtung beschrieben.

Der Stift 21 besteht aus einem mit dem Kopf 22 versehenen ersten zylindrischen Schaftteil 23, einem zu diesem konzentrischen zweiten zylindrischen Schaftteil 24 geringeren Durchmessers, einem zwischen den beiden Schaftteilen 23, 24 angeordneten exzentrischen Schaftteil 25 und einem den Schaftteil 24 fortsetzenden exzentrischen Schaftteil 26, wobei die exzentrischen Schaftteile 25, 26 jeweils kleinere Durchmesser aufweisen als die diesen jeweils vorhergehenden Schaftteile 23, 24. Die Exzentrizität der beiden Schaftteile 25, 26 ist gleichgerichtet und gleich groß.

Auf dem ersten Schaftteil 23 ist das erste, mit einer exzentrischen Bohrung versehene, ringförmige Einsatzteil 28, und auf dem zweiten Schaftteil 24 das zweite, ebenfalls mit einer exzentrischen Bohrung versehene, ringförmige Einsatzteil 29 gehaltert.

Auf den exzentrischen Schaftteilen 25, 26 sind die mit Umfangsschneiden versehenen Scheiben 30, 31 gehaltert. Die Befestigungsbohrung des flanschförmigen Befestigungsteil 32 besteht aus einer gebördelten Bohrung, wobei sich der Bördelrand in der aus den Figuren 8 und 9 ersichtlichen Weise auf der Oberseite des ringförmigen Einsatzteils 28 abstützt. Die auf dem Stift 21 gelagerten Teile der Befestigungsvorrichtung sind durch einen am Ende des exzentrischen Schaftteils 26 angebrachten Nietkopf 33 zusammengehalten.

Der kreisscheibenförmige Kopf 34 des Stifts 21 besteht aus zwei konzentrischen Umfangsteilen 35, 36 mit unterschiedlichem Radius, wobei der Übergang zwischen den beiden Umfangsteilen durch Stufen 37, 38 gebildet ist, die Gegenanschläge für einen in den Flansch 32 eingeprägten Anschlag 39 bilden. Durch die Stufen 37, 38 und den eingeprägten Anschlag 39 ist der Stift 21 in der aus Fig. 10 ersichtlichen Weise aus der in vollen Linien dargestellten Stellung in die strichpunktierte Stellung um 180 Grad drehbar.

Aus Fig. 8 ist die Befestigungsvorrichtung in ihrer Einschubstellung ersichtlich, in der die Umfangsschneiden der Scheiben 30, 31 mit der Hüllfläche der zylindrischen Einsatzteile 28, 29 fluchten, während aus Fig. 9 die verriegelte Stellung ersichtlich ist, in der die Scheiben 30, 31 gleichsinnig in einen Wandungsteil des vorgebohrten Loches eingreifen.

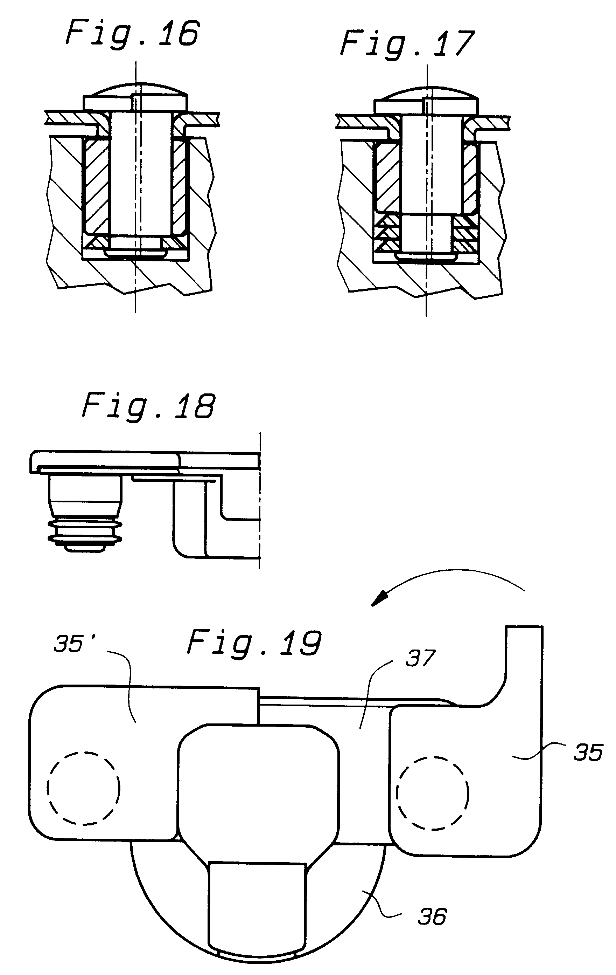

Aus den Figuren 16 und 17 sind zwei weitere Ausführungsbeispiele der Befestigungsvorrichtung ersichtlich, wobei bei beiden Ausführungsbeispielen jeweils nur ein zylindrisches Einsatzteil vorgesehen und die Befestigungsvorrichtung nach Fig. 16 nur mit einer Scheibe und die Befestigungsvorrichtung nach Fig. 17 mit einem aufeinanderliegenden Paket von drei Scheiben versehen ist.

Bei der letzten Ausführungsform nach den Figuren 18 und 19 ist der Stift statt mit einem Kopf mit einem aus einem Plattenteil 35 versehenen Hebel versehen, so daß sich über diesen Hebel der Stift ohne einen Schraubendreher von Hand zwischen seiner entriegelten und seiner verriegelten Stellung drehen läßt. Bei dem Ausführungsbeispiel nach den Figuren 18 und 19 besteht das Beschlagteil aus einem sogenannten "Einstecktopf" eines Zweilenkerscharniers, bei dem das in eine Bohrung versenkbare, topfförmige Teil 36 mit einem Befestigungsflansch 37 versehen ist. Die Betätigungsteile 35, 35' der beiden Befestigungsvorrichtungen entsprechen in ihrer Kontur in Draufsicht jeweils der Hälfte des Befestigungsflansches 37, so daß die Plattenteile 35, 35' in ihrer verriegelten Stellung den Befestigungsflansch 37 etwa kantengleich überdecken.

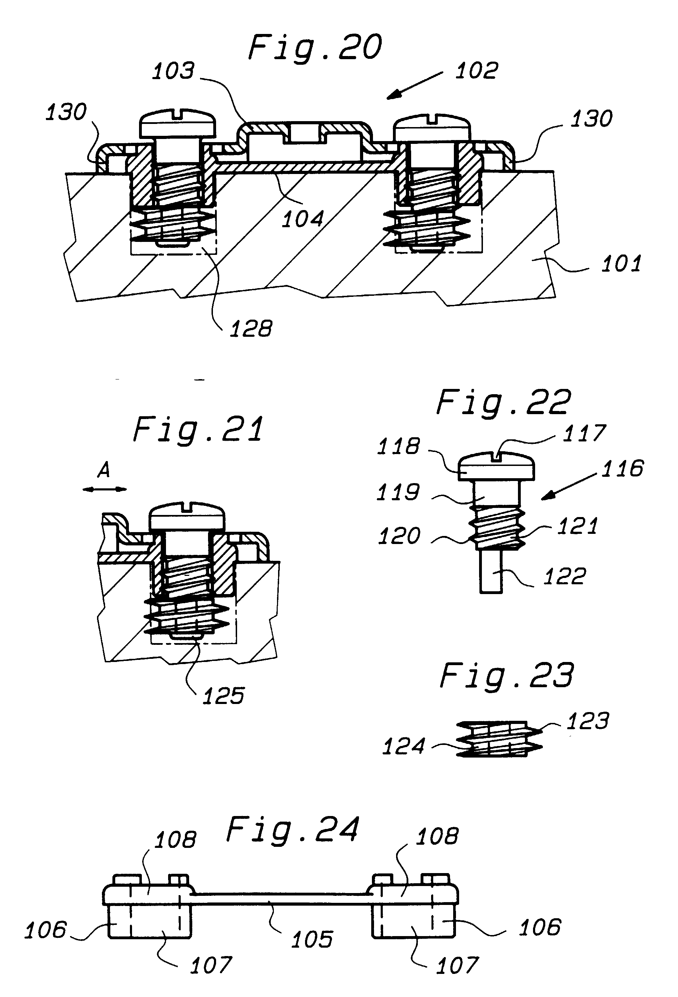

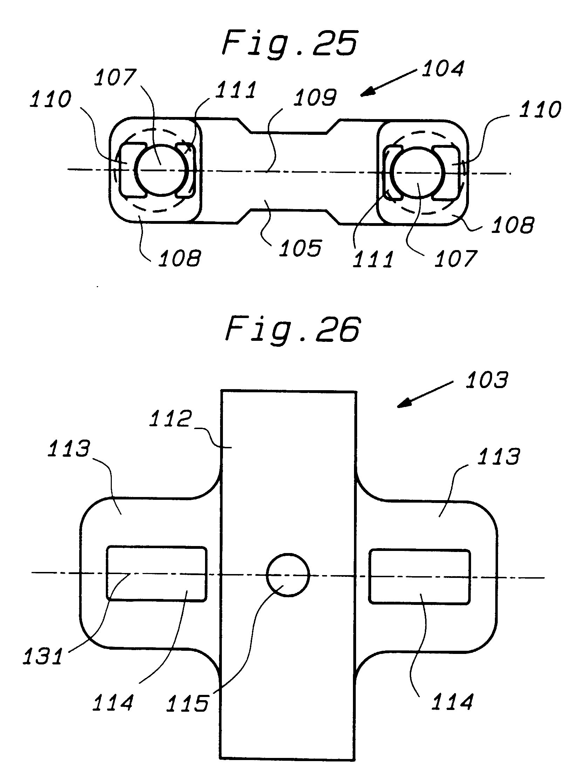

Anhand der Fig. 20 bis 26 wird nun ein weiteres Ausführungsbeispiel der Erfindung erläutert.

An einer Möbelwand 101 ist die Befestigungsplatte 102 mit der erfindungsgemäßen Befestigungsvorrichtung befestigt.

Die Befestigungsplatte 102 besteht aus einer Montageplatte 103 beispielsweise für den Scharnierarm eines Möbelscharniers und einer von dieser überdeckten Unterplatte 104. Die Unterplatte 104 besteht aus einem im wesentlichen streifenförmigen Plattenteil 105 vorzugsweise aus Kunststoff, dessen Endbereiche einstükkig mit dübelartigen Buchsen 106 versehen sind, die exzentrische Durchgangsbohrungen 107 aufweisen. Auf der den Buchsen 106 gegenüberliegenden Seite ist die Unterplatte 104 mit etwa quadratischen sockelartigen Erhöhungen 108 versehen. Auf diesen sockelartigen Erhöhungen 108 befinden sich quer zu der Mittellinie 109 der Unterplatte 104 auf gegenüberliegenden Seiten der exzentrischen Bohrungen 107 kragenartige Erhöhungen 110, 111, deren Höhe der Dicke der die Unterplatte 104 überdeckenden Befestigungsplatte 103 entspricht. Die Befestigungsplatte 103 besteht aus einem länglichen Mittelteil 112 und kreuzförmig mit diesem verbundenen Seitenteilen 113, die mit rechteckigen Langlöchern 114 versehen sind. Die Breite der Langlöcher 114 entspricht der Breite der kragenartigen Vorsprünge 110, 111, so daß diese mit ihren seitlichen Rändern in der aus Fig. 20 ersichtlichen Montagestellung kraftschlüssig an den seitlichen Rändern der Langlöcher 114 anliegen. Die Montageplatte 103 ist mit einer mittleren Gewindebohrung 115 versehen, so daß sich auf dieser ein Scharnierarm oder ein anderes Beschlagteil befestigen läßt.

In den exzentrischen Bohrungen 107 der dübelförmigen Buchsen 106 ist der der Verriegelung dienende Stift 116 gehaltert. Der Stift 116 ist angrenzend an einen mit einem Schlitz oder Kreuzschlitz 117 versehenen Kopf 118 mit einem gewindefreien Schaftteil 119 und einem ein selbstschneidendes Gewinde 120 aufweisenden Schaftteil 121 versehen. Der Schaftteil 121 ist durch einen exzentrischen Schaftteil 122 geringerer Dicke fortgesetzt, auf dem die mit einem selbstschneidenden Gewinde 123 versehene Scheibe 124, die mit einer zentrischen Bohrung versehen ist, aufgesetzt ist. Zur Befestigung der Scheibe 124 auf dem Schaftteil 122 ist das Ende des Schaftteils mit einem Nietkopf 125 versehen.

Der Stift 116 ist mit seinem gewindefreien Schaftteil 119 und dem angrenzenden, mit dem selbstschneidenden Gewinde versehenen Schaftteil 121 in der exzentrischen Durchgangsbohrung 107 oder der dübelförmigen Buchsen 106 gehaltert. Dabei schneiden sich die selbstschneidenden Gewindegänge 120 in die Wandung der Bohrung 107 ein, so daß sich der Stift über eine begrenzte Strecke in die Bohrung hinein und aus dieser herausschrauben läßt.

In der links aus Fig. 20 ersichtlichen Montagestellung ist der Stift 116 in eine Stellung gedreht, in der der durch die Gewindegänge 123 definierte Hüllzylinder der Scheibe 124 mit der Buchse 106 fluchtet. Dabei haben der Hüllzylinder und die Buchse etwa den gleichen Durchmesser. In dieser Montagestellung wird die Buchse mit fluchtender Scheibe in ein vorgebohrtes Sackloch 128 der Möbelplatte 101 eingesetzt, das etwa einen gleichen Durchmesser besitzt wie die Buchse 106. Durch eine Drehung von etwa 180° wird der Stift 116 aus seiner links aus Fig. 20 ersichtlichen vorbereiteten Montagestellung in seine rechts aus Fig. 20 ersichtliche Verriegelungsstellung gedreht. In der Verriegelungsstellung schneiden sich die schneidenden Gewindegänge 123 der Scheibe 124 in die Seitenwandung der Sacklochbohrung 128 in radialer Richtung ein.

Die Länge der Schaftteile 119, 121 des Stifts 116 ist um etwas weniger als die Hälfte der Steigung der Gewindegänge 120 größer als die Länge der Durchgangsbohrung 107, so daß der Stift 116 bei seiner Drehung um diese Strecke in die Bohrung 107 hineingeschraubt und auch wieder herausgeschraubt werden kann.

Wird der Stift 16 aus seiner links aus Fig. 20 ersichtlichen Stellung um etwa 180° in seine rechts aus Fig. 20 ersichtliche Verriegelungsstellung gedreht, legt sich der Kopf 118 auf die Ränder des Langloches 114 der Befestigungsplatte 101 und spannt diese gegen die Möbelplatte 101. Die Befestigungsplatte 103 ist in der aus Fig. 20 ersichtlichen Weise mit einem gegen die Möbelplatte 101 abgewinkelten Rand 130 versehen, der sich zusätzlich auf der Möbelplatte abstützen kann.

Soll die Befestigungsplatte 103 nach ihrer Montage in Richtung der durch die Langlöcher 114 verlaufenden Mittellinie 131 verschoben werden, wird der Stift 116 um eine unter 180° liegende Drehung, beispielsweise um eine Drehung von etwa 45°, in seine Öffungsstellung zurückgedreht, so daß die schneidenden Gewindegänge 123 der Scheibe 124 noch in der aus Fig. 21 ersichtlichen Weise arretierend an der Wandung der Sacklochbohrung 128 angreifen, sich der Kopf 118 um eine kleine Strecke von den Rändern der Langlöcher 114 abhebt und zur Justierung sich die Befestigungsplatte 103 relativ zu der Unterplatte 104 in Richtung des Doppelpfeils A in Fig. 21 verschieben läßt. Ist die gewünschte Einstellung vorgenommen worden, werden die beiden Stifte 116 wieder durch eine Drehung, beispielsweise um etwa eine Vierteldrehung, festgezogen.

Ein Überdrehen des Stifts 116 in Öffnungsrichtung wird dadurch verhindert, daß sich die Scheibe 124 gegen die untere ringförmige Stirnfläche der Buchse anlegt.

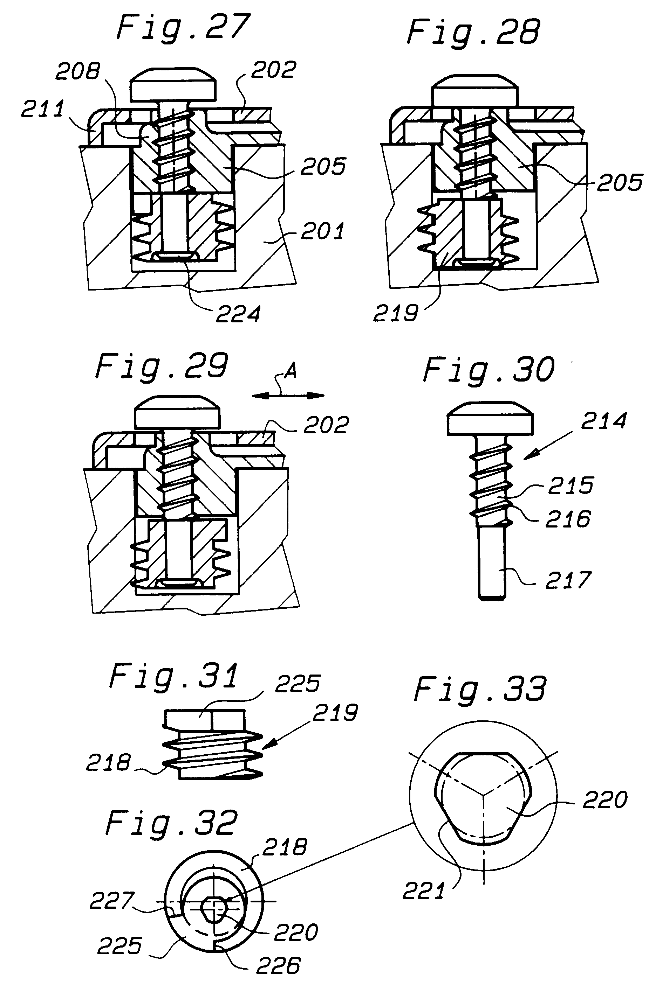

Ein letztes Ausführungsbeispiel der Erfindung wird anhand der Fig. 27 bis 36 erläutert.

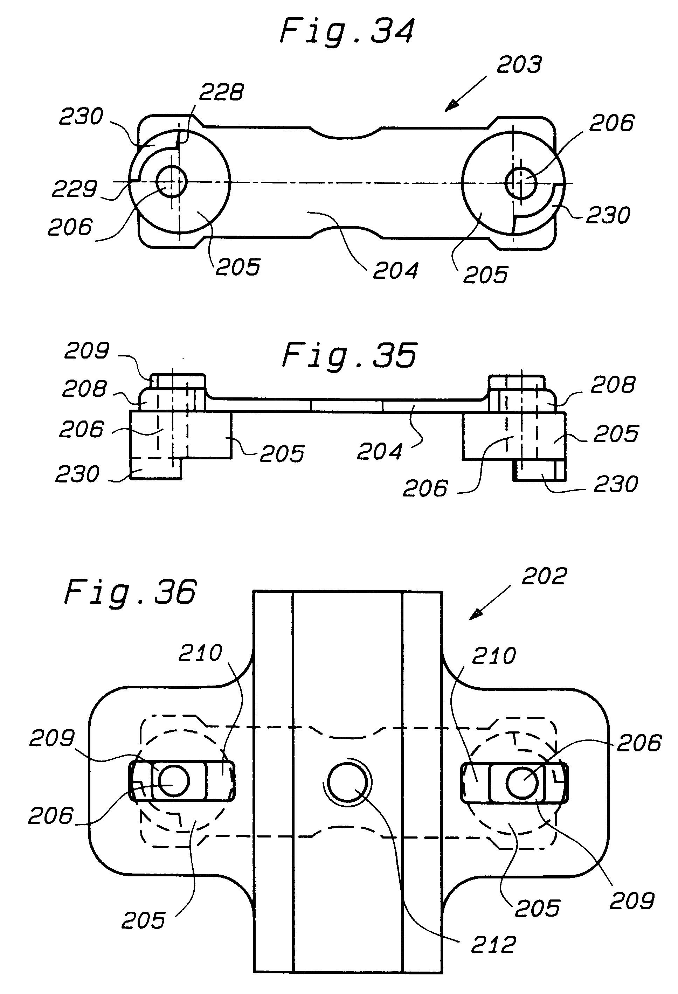

Die Fig. 27 bis 29 zeigen einen Querschnitt durch den aus Fig. 36 ersichtlichen linken Flügel der Montageplatte mit der erfindungsgemäßen Befestigungsvorrichtung, die in unterschiedlichen Montagestellungen dargestellt sind.

Die Montageplatte 202 überdeckt eine mit der Befestigungsvorrichtung versehene Unterplatte 203 und dient der Befestigung beispielsweise eines Scharnierarms eines Möbelscharniers.

Die Unterplatte 203 besteht aus einem im wesentlichen streifenförmigen Plattenteil 204, vorzugsweise aus Kunststoff, dessen Endbereiche einstückig mit dübelartigen Buchsen 205 versehen sind, die exzentrische Durchgangsbohrungen 206 aufweisen. Auf der den Buchsen 205 gegenüberliegenden Seite ist die Unterplatte 203 mit sockelartigen Erhöhungen 208 versehen, die auf ihrer Oberseite in Draufsicht etwa rechteckige Führungsstücke 209 tragen, die ebenfalls von den Bohrungen 206 durchsetzt werden. In den seitlichen Flügeln der Montageplatte 202, die als flanschförmige Teile deren Befestigung dienen, sind Langlöcher 210 vorgesehen, deren Breite der Breite der Führungsstücke 209 entsprechen, die mit ihren Seiten an den Rändern der Langlöcher 210 anliegen, so daß die Montageplatte bei gelockerter Befestigungsvorrichtung entsprechend der Länge der Langlöcher 210 auf den Führungsstücken 209 verschoben werden kann, wobei sich die unteren Randbereiche der Langlöcher auf den sockelartigen Erhöhungen 208 abstützen. Die seitlichen Flügel der Montageplatte 202 sind mit einem umlaufenden in Richtung auf das Möbelteil 201 umgebördelten Rand 211 versehen, dessen Höhe der Höhe der sockelartigen Erhöhungen 208 entspricht.

Die Montageplatte 202 weist ein längliches Mittelteil auf und ist kreuzförmig mit den Flügelteilen verbunden, die auf einer das Mittelteil kreuzenden Mittellinie mit den Langlöchern 210 versehen sind. Die Montageplatte 202 ist mit einer mittleren Gewindebohrung 212 versehen, die der Befestigung eines Scharnierarms oder eines anderen Beschlagteils dient.

In den exzentrischen Bohrungen 206 der dübelförmigen Buchsen 205 ist der der Verriegelung dienende Stift 214 gehaltert. Der Stift 214 ist angrenzend an einen mit einem Schlitz oder Kreuzschlitz versehenen Kopf mit einem Schaftteil 215 versehen, der ein selbstschneidendes Gewinde 216 besitzt. Der mit den selbstschneidenden Gewinde 216 versehene Schaftteil 215 ist von einem gewindefreien Schaftteil 217 geringerer Dicke fortgesetzt. Auf diesen gewindefreien Schaftteil 217 ist eine mit einem selbstschneidenden Gewinde 218 versehene Scheibe 219 aufgesetzt, die mit einer exzentrischen Bohrung 220 versehen ist. Die exzentrische Bohrung besitzt zwischen runden Bohrungsabschnitten gerade, ein Dreieck aufspannende Seiten 221, wie am besten aus Fig. 33 ersichtlich ist.

Zur Montage der Befestigungsvorrichtung wird die Unterplatte 204 in der aus Fig. 36 ersichtlichen Weise derart von unten her in die Montageplatte 202 eingelegt, daß die Seiten der Führungsstükke 209 kraftschlüssig an den Rändern der Langlöcher 210 anliegen. Anschließend wird in die exzentrischen Bohrungen 206 der Dübel 205 der Stift 214 soweit eingeschraubt, daß die Unterseite des Kopfes des Stiftes zu der Oberseite der Flügelteile noch einen Abstand aufweist, der etwa der Hälfte der Ganghöhe des selbstschneidenden Gewindes 216 entspricht. In dieser aus Fig. 27 ersichtlichen Stellung des Stiftes 214 befindet sich das untere Ende des mit dem selbstschneidenden Gewinde versehenen Schaftteils in der Ebene der unteren Stirnfläche der Buchse 205. In dieser Stellung wird die Scheibe 215 auf den gewindefreien Schaftteil 217 des Stifts 214 aufgeschoben und so ausgerichtet, daß der Hüllzylinder der Scheibe 219 mit der Mantelfläche der Buchse 209 fluchtet. Nach dieser Ausrichtung wird das untere Ende des Schaftteils 217 zur Befestigung der Scheibe 219 auf diesem vernietet. Bei der Bildung des Nietkopfs 224 erfährt das untere Ende des Schaftteils 217 eine diesen verbreiternde Stauchung, so daß zumindest der an den Nietkopf 224 angrenzende Schaftteil das polygone Profil 221 der Bohrung 220 der Scheibe 219 weitgehend ausfüllt und die Scheibe 219 formschlüssig und damit undrehbar mit dem Schaftteil 217 verbunden ist. In dieser Stellung befindet sich die Befestigungsvorrichtung in ihrer aus Fig. 27 ersichtlichen Montagestellung, in der sich diese behinderungsfrei in das in dem Möbelteil 201 vorgebohrte Sackloch einführen läßt.

Die Scheibe 219 ist an ihrem oberen Ende oberhalb des selbstschneidenden Gewindes 218 mit einem sektorartigen radialen Fortsatz 225 versehen, dessen Seiten 226, 227 Anschläge für Gegenanschläge 228, 229 bilden, die durch die Seiten eines axialen Fortsatzes 230 der Buchsen 205 geschaffen sind. Dabei sind die Anschläge und die Gegenanschläge 226 bis 228 derart aufeinander abgestimmt, daß jeweils korrespondierende Anschläge aneinander anliegen, wenn sich der Stift in seiner aus Fig. 27 ersichtlichen Montagestellung befindet, in der die Hüllfläche der Scheibe 219 mit dem Mantel der Buchse 205 fluchtet, und wenn in der anderen um etwa 180° gedrehten Stellung die Scheibe um die größte Exzentrizität aus der verlängerten Kontur des Mantels der Buchse 205 herausgedreht worden ist.

In der aus Fig. 27 ersichtlichen Montagestellung liegt die obere Stirnseite der Scheibe 219 an der unteren Stirnseite der Buchse 205 an, so daß zusätzlich zu den Anschlägen ein die Montagestellung sichernder Anschlag gegeben ist.

In der aus Fig. 28 ersichtlichen verriegelten Stellung ist die Scheibe 219 gegenüber der aus Fig. 27 ersichtlichen Stellung um etwa 180° gedreht, so daß sich die schneidenden Gewindegänge 218 in die Wandung der Sacklochbohrung einschneiden. In der aus Fig. 28 ersichtlichen Stellung drückt der Kopf des Stifts 214 die Montageplatte klemmend gegen das Möbelteil 201 an.

In der aus Fig. 29 ersichtlichen Stellung ist der Stift gegenüber der aus Fig. 28 ersichtlichen Stellung um einen unter 180° liegenden Winkel zurückgedreht worden, so daß sich der Kopf leicht von der Montageplatte 202 abgehoben hat, ohne daß jedoch die schneidenden Gewindegänge 218 aus ihren Eingriff mit der Wandung der Sacklochbohrung herausgetreten sind. Durch diese Rückdrehung hat die Befestigungsvorrichtung eine gewisse Lockerung erfahren, so daß sich die Montageplatte 202 zu ihrer Justierung in Richtung des Doppelpfeils A verschieben läßt. Nach der gewünschten Justierung kann sodann der Stift wieder in seiner aus Fig. 28 ersichtlichen Stellung festgezogen werden.

## Patentansprüche

1. Befestigungsvorrichtung für ein mit einer Befestigungsbohrung versehenes Beschlagteil , vorzugsweise für ein Scharnierteil, mit einer in ein vorgebohrtes Loch (20) einsetzbaren Buchse (1), in deren axial verlaufendem, durchgehenden Loch (2) ein die Befestigungsbohrung durchsetzender, mit einem Kopf versehener Stift (5, 21) drehbar gelagert ist,
**dadurch gekennzeichnet**,
daß das durchgehende Loch (2) exzentrisch in der Buchse (1) oder einem ringförmigen Einsatzteil (28, 29) angeordnet ist und daß der Stift (5, 21) mit einem das Loch überragenden, exzentrischen Schaftteil (15, 25, 26) versehen ist, an dem mindestens eine Scheibe (16, 30, 31) befestigt ist und
daß die Exzentrizitäten der Buchse (1) bzw. der Einsatzteile (28, 29) und des Schaftteils (15, 25, 26) derart aufeinander abgestimmt sind, daß die Scheibe in einer Drehstellung des Stifts konzentrisch zu der Buchse bzw. dem Einsatzteil ist oder mit diesem fluchtet und in einer anderen Drehstellung das Einsatzteil bzw. die Buchse radial überragt.

2. Befestigungsvorrichtung nach Anspruch 1, dadurch gekennzeichnet, daß die Scheibe (30, 31) mit mindestens einer umlaufenden, schneidenartigen Kante versehen ist.

3. Befestigungsvorrichtung nach einem der Ansprüche 1 oder 2, dadurch gekennzeichnet, daß auf dem exzentrischen Schaftteil mehrere Scheiben mit umlaufenden, schneidenartigen Kanten gelagert sind.

4. Befestigungsvorrichtung nach einem der Ansprüche 1 bis 3, dadurch gekennzeichnet, daß die Scheibe (16) mit mindestens einem schneidenartigen, wendelförmigen Gewindegang (17) versehen ist.

5. Befestigungsvorrichtung nach einem der Ansprüche 1 bis 4, dadurch gekennzeichnet, daß das exzentrische Schaftteil (15) einen kleineren Durchmesser besitzt als das in der Buchse (1) gelagerte Schaftteil (4) des Stifts (5).

6. Befestigungsvorrichtung nach einem der Ansprüche 1 bis 5, dadurch gekennzeichnet, daß das exzentrische Schaftteil (15, 26) mit der Scheibe (16, 31) vernietet ist.

7. Befestigungsvorrichtung nach einem der Ansprüche 1 bis 5, dadurch gekennzeichnet, daß das exzentrische Schaftteil (19) mit der Scheibe (16) verschraubt ist.

8. Befestigungsvorrichtung nach einem der Ansprüche 1 bis 7, dadurch gekennzeichnet, daß der Kopf (6) mit einem radialen Fortsatz (8) oder Vorsprung versehen ist, der mit mindestens einem Gegenanschlag im äußeren Randbereich der Befestigungsbohrung des Beschlagteils zusammenwirkt.

9. Befestigungsvorrichtung nach Anspruch 8, dadurch gekennzeichnet, daß der Fortsatz und der Gegenanschlag eine Drehung des Stifts von etwa 180 Grad zulassen.

10. Befestigungsvorrichtung nach Anspruch 8 oder 9, dadurch gekennzeichnet, daß der Fortsatz ein nasenförmiger Vorsprung (8) ist, der in einer sektorartigen Vertiefung eines aus Blech oder Guß bestehenden Halteteils (12) des Beschlagteils angeordnet ist.

11. Befestigungsvorrichtung nach Anspruch 8 bis 10, dadurch gekennzeichnet, daß der Fortsatz ein zu dem Kopf (34) konzentrischer, sektorartig verbreiterter Randbereich (36) ist, dessen stufenartige Übergänge (37, 38) zu dem Umfangsrand (35) des Kopfes die Anschläge bilden.

12. Befestigungsvorrichtung nach Anspruch 1, dadurch gekennzeichnet, daß die Scheiben (30, 31) im Querschnitt trapezförmig sind.

13. Befestigungsvorrichtung nach einem der vorhergehenden Ansprüche, dadurch gekennzeichnet, daß die Scheiben (16, 30, 31) im wesentlichen denselben Durchmesser besitzen wie die Buchsen oder Einsätze.

14. Befestigungsvorrichtung nach einem der Ansprüche 8 bis 13, dadurch gekennzeichnet, daß die Scheibe bei dem Anliegen einer Seite des Fortsatzes in einem Anschlag in axialer Richtung mit der Buchse fluchtet und bei dem Anliegen der anderen Seite des Fortsatzes an dem anderen Anschlag radial ausgefahren ist.

15. Befestigungsvorrichtung nach einem der vorhergehenden Ansprüche, dadurch gekennzeichnet, daß der Stift (21) aus zwei Schaftteilen (23, 24) unterschiedlichen Durchmessers besteht, die jeweils exzentrische Schaftteile (25, 26) besitzen, und daß die Schaftteile (23, 24) exzentrische Bohrungen von ringförmigen Einsatzteilen (28, 29) durchsetzen und auf den exzentrischen Schaftteilen (25, 26) die Scheiben (30, 31) gehaltert sind.

16. Befestigungsvorrichtung nach einem der vorhergehenden Ansprüche, dadurch gekennzeichnet, daß der Schaft statt mit einem Kopf mit einem oberhalb der Befestigungsbohrung befindlichen Hebel (35) verbunden ist.

17. Befestigungsvorrichtung nach Anspruch 16, dadurch gekennzeichnet, daß der Hebel aus einem Plattenteil (35, 35') besteht, das in der Schließstellung Teile des Beschlagteils, z.B. einen Befestigungsflansch (37), kantengleich überdeckt.

18. Befestigungsvorrichtung nach einem der vorhergehenden Ansprüche, dadurch gekennzeichnet, daß die Buchse (1) mit einem Flansch (3) versehen ist, der mit einem radialen Vorsprung in einer Bördelecke eines Plattenteils (12) des Beschlagteils undrehbar gehalten ist.

19. Befestigungsvorrichtung nach einem der Ansprüche 1 bis 7, dadurch gekennzeichnet, daß der in der Buchse gelagerte Schaftteil des Stifts mit einem Gewinde versehen ist, das selbstschneidend in die Wandung der Bohrung der Buchse eingreift oder in ein Innengewinde der Buchse eingeschraubt ist.

20. Befestigungsvorrichtung nach Anspruch 19, dadurch gekennzeichnet, daß zwei dübelartige Buchsen mit einer Unterplatte verbunden sind, auf der ein die Unterplatte zumindest teilweise überdeckendes plattenförmiges Beschlagteil, beispielsweise eine Montageplatte, befestigt ist, das mit zwei von den Stiften durchsetzten Langlöchern mit einer gemeinsamen Mittellinie versehen ist.

21. Befestigungsvorrichtung nach Anspruch 19 oder 20, dadurch gekennzeichnet, daß die Buchsen mit kraftschlüssig an den Seitenrändern der Langlöcher anliegenden kragenartigen Vorsprüngen versehen sind.

22. Befestigungsvorrichtung nach einem der Ansprüche 19 bis 21, dadurch gekennzeichnet, daß der mit dem Gewinde versehene Schaftteil des Stifts zwischen dem Kopf und der Scheibe in etwa die Hälfte der Gewinde-Steigung länger ist als die Buchse.

23. Befestigungsvorrichtung nach dem Oberbegriff des Anspruch 1,
**dadurch gekennzeichnet,**
daß das durchgehende Loch exzentrisch in der Buchse angeordnet ist, daß der Stift mit einem endseitigen Schaftteil versehen ist, an dem eine Scheibe exzentrisch und undrehbar befestigt ist und daß die Exzentrizitäten der Buchse und der Bohrung der Scheibe derart aufeinander abgestimmt sind, daß die Scheibe in einer Drehstellung des Stifts konzentrisch zu der Buchse ist und in einer anderen Drehstellung die Buchse radial überragt.

24. Befestigungsvorrichtung nach Anspruch 23, dadurch gekennzeichnet, daß der in der Buchse gelagerte Schaftteil des Stifts mit einem Gewinde versehen ist, das selbstschneidend in die Wandung der Bohrung der Buchse eingreift oder in ein Innengewinde der Buchse eingeschraubt ist.

25. Befestigungsvorrichtung nach Anspruch 23 oder 24, dadurch gekennzeichnet, daß die Befestigungsbohrung des Beschlagteils ein Langloch ist.

26. Befestigungsvorrichtung nach den Ansprüche 23 bis 25, dadurch gekennzeichnet, daß die Scheibe mit mindestens einer umlaufenden schneidenartigen Kante versehen ist.

27. Befestigungsvorrichtung nach einem der Ansprüche 23 bis 26, dadurch gekennzeichnet, daß die Scheibe mit mindestens einem schneidenartigen, wendelförmigen Gewindegang versehen ist.

28. Befestigungsvorrichtung nach einem der Ansprüche 23 bis 27, dadurch gekennzeichnet, daß das endseitige Schaftteil einen kleineren Durchmesser besitzt als das in der Buchse gelagerte Schaftteil des Stifts.

29. Befestigungsvorrichtung nach einem der Ansprüche 23 bis 28, dadurch gekennzeichnet, daß das endseitige Schaftteil mit der Scheibe vernietet ist.

30. Befestigungsvorrichtung nach Anspruch 29, dadurch gekennzeichnet, daß die Bohrung der Scheibe mindestens im Bereich des Nietkopfs des Schaftteils ein polygones Profil besitzt.

31. Befestigungsvorrichtung nach einem der Ansprüche 23 bis 30, dadurch gekennzeichnet, daß das endseitige Ende der Buchse mit einem axialen Fortsatz versehen ist, dessen Seiten Anschläge für einen radialen Fortsatz des Stifts bilden.

32. Befestigungsvorrichtung nach Anspruch 31, dadurch gekennzeichnet, daß die Fortsätze sektorartig ausgebildet sind.

33. Befestigungsvorrichtung nach Anspruch 31 oder 32, dadurch gekennzeichnet, daß sich der radiale Fortsatz an dem oberen Endbereich der Scheibe befindet.

34. Befestigungsvorrichtung nach einem der Ansprüche 31 bis 33, dadurch gekennzeichnet, daß die durch die Fortsätze gebildeten Anschläge eine Drehung des Stifts in der Buchse um etwa 180° zulassen.

35. Befestigungsvorrichtung nach einem der Ansprüche 23 bis 34, dadurch gekennzeichnet, daß zwei dübelartige Buchsen mit einer Unterplatte verbunden sind, auf der ein die Unterplatte zumindest teilweise überdeckendes plattenförmiges Beschlagteil, beispielsweise eine Montageplatte, befestigt ist, das mit zwei von den Stiften durchsetzten Langlöchern versehen ist, die auf einer gemeinsamen Mittellinie liegen.

36. Befestigungsvorrichtung nach einem der Ansprüche 23 bis 35, dadurch gekennzeichnet, daß die Buchsen mit kraftschlüssig in den Seitenrädern der Langlöcher anliegenden kragenartigen Vorsprüngen versehen sind.

37. Befestigungsvorrichtung nach einem der Ansprüche 23 bis 36, dadurch gekennzeichnet, daß der mit dem Gewinde versehene Schaftteil des Stifts zwischen dem Kopf und der Scheibe um etwa die Hälfte der Gewindesteigung länger ist als die Buchse.

## Claims

1. Fastening device for a fitting part, preferably for a hinge part, which is provided with a fastening bore, having a bushing (1) which can be inserted into a predrilled hole (20) and in the axially running through-hole (2) of which there is mounted, in a rotatable manner, a pin (5, 21) which passes through the fastening bore and is provided with a head, characterized in that the through-hole (2) is arranged eccentrically in the bushing (1) or in an annular insert part (28, 29), and in that the pin (5, 21) is provided with an eccentric shank part (15, 25, 26) which projects beyond the hole and on which at least one washer (16, 30, 31) is fastened, and in that the eccentricities of the bushing (1) or of the insert parts (28, 29) and of the shank part (15, 25, 26) are coordinated with one another such that the washer, in one rotational position of the pin, is concentric with the bushing or the insert parts, or is aligned therewith, and, in another rotational position, projects radially beyond the insert part or the bushing.

2. Fastening device according to Claim 1, characterized in that the washer (30, 31) is provided with at least one peripheral, cutting-type edge.

3. Fastening device according to either of Claims 1 and 2, characterized in that a plurality of washers with peripheral, cutting-type edges are mounted on the eccentric shank part.

4. Fastening device according to one of Claims 1 to 3, characterized in that the washer (16) is provided with at least one cutting-type, helical thread turn (17).

5. Fastening device according to one of Claims 1 to 4, characterized in that the eccentric shank part (15) has a smaller diameter than the shank part (4) of the pin (5), said shank part (4) being mounted in the bushing (1).

6. Fastening device according to one of Claims 1 to 5, characterized in that the eccentric shank part (15, 26) is riveted to the washer (16, 31).

7. Fastening device according to one of Claims 1 to 5, characterized in that the eccentric shank part (15) is screwed to the washer (16).

8. Fastening device according to one of Claims 1 to 7, characterized in that the head (6) is provided with a radial continuation (8) or protrusion which interacts with at least one mating stop in the outer border region of the fastening bore of the fitting part.

9. Fastening device according to Claim 8, characterized in that the continuation and the mating stop allow a pin rotation of approximately 180 degrees.

10. Fastening device according to Claim 8 or 9, characterized in that the continuation is a nose-like protrusion (8) which is arranged in a sector-like depression of a retaining part (12) of the fitting part, said retaining part consisting of sheet metal or cast iron.

11. Fastening device according to Claims 8 to 10, characterized in that the continuation is a border region (36) which is concentric with the head (34), is widened in a sector-like manner and of which the step-like transitions (37, 38) to the circumferential border (35) of the head form the stops.

12. Fastening device according to Claim 1, characterized in that the washers (30, 31) are trapezoidal in cross section.

13. Fastening device according to one of the preceding claims, characterized in that the washers (16, 30, 31) have essentially the same diameter as the bushings or inserts.

14. Fastening device according to one of Claims 8 to 13, characterized in that the washer, with the abutment of one side of the continuation in one stop, is aligned axially with the bushing and, with the abutment of the other side of the continuation against the other stop, is extended radially.

15. Fastening device according to one of the preceding claims, characterized in that the pin (21) comprises two shank parts (23, 24) which have different diameters and each have eccentric shank parts (25, 26), and in that the shank parts (23, 24) pass through eccentric bores of annular insert parts (28, 29), and the washers (30, 31) are secured on the eccentric shank parts (25, 26).

16. Fastening device according to one of the preceding claims, characterized in that, rather than being connected to a head, the shank is connected to a lever (35) located above the fastening bore.

17. Fastening device according to Claim 16, characterized in that the lever comprises a plate part (35, 35') which, in the closed position, covers over parts of the fitting part, e.g. a fastening flange (37), with the edges congruent with one another.

18. Fastening device according to one of the preceding claims, characterized in that the bushing (1) is provided with a flange (3) which is retained in a non-rotatable manner, by way of a radial protrusion, in a beaded corner of a plate part (12) of the fitting part.

19. Fastening device according to one of Claims 1 to 7, characterized in that the pin-shank part which is mounted in the bushing is provided with a thread which engages in the wall of the bore of the bushing with self-tapping action or is screwed into an internal thread of the bushing.

20. Fastening device according to Claim 19, characterized in that two dowel-like bushings are connected to a bottom plate on which there is fastened a plate-like fitting part, for example an installation plate, which at least partially covers over the bottom plate and is provided with two slots which have the pins passing through them and have a common centre line.

21. Fastening device according to Claim 19 or 20, characterized in that the bushings are provided with collar-like protrusions which butt against the side borders of the slots in a frictionally locking manner.

22. Fastening device according to one of Claims 19 to 21, characterized in that the threaded shank part of the pin, between the head and the washer, is longer, by approximately half the thread pitch, than the bushing.

23. Fastening device according to Claim 1, characterized in that the pin is provided with an end-side shank part on which a washer is fastened in an eccentric and non-rotatable manner, and in that the eccentricities of the bushing and of the bore of the washer are coordinated with one another such that the washer, in one rotational position of the pin, is concentric with the bushing and, in another rotational position, projects radially beyond the bushing.

24. Fastening device according to Claim 23, characterized in that the pin-shank part which is mounted in the bushing is provided with a thread which engages in the wall of the bore of the bushing with self-tapping action or is screwed into an internal thread of the bushing.

25. Fastening device according to Claim 23 or 24, characterized in that the fastening bore of the fitting part is a slot.

26. Fastening device according to Claims 23 to 25, characterized in that the washer is provided with at least one peripheral cutting-type edge.

27. Fastening device according to one of Claims 23 to 26, characterized in that the washer is provided with at least one cutting-type, helical thread turn.

28. Fastening device according to one of Claims 23 to 27, characterized in that the end-side shank part has a smaller diameter than the pin-shank part which is mounted in the bushing.

29. Fastening device according to one of Claims 23 to 28, characterized in that the end-side shank part is riveted to the washer.

30. Fastening device according to Claim 29, characterized in that the bore of the washer has a polygonal profile at least in the region of the rivet head of the shank part.

31. Fastening device according to one of Claims 23 to 30, characterized in that the end-side end of the bushing is provided with an axial continuation, of which the sides form stops for a radial continuation of the pin.

32. Fastening device according to Claim 31, characterized in that the continuations are of sector-like design.

33. Fastening device according to Claim 31 or 32, characterized in that the radial continuation is located at the top end region of the washer.

34. Fastening device according to one of Claims 31 to 33, characterized in that the stops formed by the continuations allow a pin rotation in the bushing of approximately 180°.

35. Fastening device according to one of Claims 23 to 34, characterized in that two dowel-like bushings are connected to a bottom plate on which there is fastened a plate-like fitting part, for example an installation plate, which at least partially covers over the bottom plate and is provided with two slots which have the pins passing through them and are located on a common centre line.

36. Fastening device according to one of Claims 23 to 35, characterized in that the bushings are provided with collar-like protrusions which butt in the side borders of the slots in a frictionally locking manner.

37. Fastening device according to one of Claims 23 to 36, characterized in that the threaded shank part of the pin, between the head and the washer, is longer, by approximately half the thread pitch, than the bushing.

## Revendications

1. Dispositif de fixation pour une ferrure ayant un alésage de fixation, de préférence pour un élément de charnière, avec une douille (1) insérable dans un trou percé préalablement (20), dans le trou traversant (2) de celle-ci, s'étendant axialement, est logée à rotation une goupille (5, 21) traversant l'alésage de fixation, pourvue d'une tête,
caractérisé
en ce que le trou traversant (2) est ménagé d'une manière excentré dans la douille (1) ou une pièce d'insertion annulaire (28, 29), et en ce que la goupille (5, 21) est pourvue d'une partie de tige excentrique (15, 25, 26) faisant saillie sur le trou, à laquelle est fixé au moins un disque (16, 30, 31) et
en ce que les excentricités de la douille (1) respectivement des pièces d'insertion (28, 29) et de la partie de tige (15, 25, 26) sont accordées les unes aux autres de façon que le disque, dans une position de rotation de la goupille, soit concentrique à la douille respectivement à la pièce d'insertion ou soit aligné avec celle-ci, et dans une autre position de rotation, fasse saillie radialement sur la pièce d'insertion respectivement la douille.

2. Dispositif de fixation selon la revendication 1, caractérisé en ce que le disque (30, 31) présente au moins une arête tranchante s'étendant tout autour.

3. Dispositif de fixation selon l'une des revendications 1 ou 2, caractérisé en ce que sont logés sur la partie de tige excentrique plusieurs disques ayant des arêtes tranchantes s'étendant tout autour.

4. Dispositif de fixation selon l'une des revendications 1 à 3, caractérisé en ce que le disque (16) présente au moins un pas de vis hélicoidal coupant (17).

5. Dispositif de fixation selon l'une des revendications 1 à 4, caractérisé en ce que la partie de tige excentrique (15) a un plus petit diamètre que la partie de tige (4) de la goupille (5) logée dans la douille (1).

6. Dispositif de fixation selon l'une des revendications 1 à 5, caractérisé en ce que la partie de tige excentrique (15, 26) est assemblée par rivetage avec le disque (16, 31).

7. Dispositif de fixation selon l'une des revendications 1 à 5, caractérisé en ce que la partie de tige excentrique (19) est assemblée avec le disque (16) par vissage.

8. Dispositif de fixation selon l'une des revendications 1 à 7, caractérisé en ce que la tête (6) est pourvue d'un prolongement radial (8) ou saillie qui coopère avec au moins une contre-butée dans la zone de bord extérieure de l'alésage de fixation de la ferrure.

9. Dispositif de fixation selon la revendication 8, caractérisé en ce que le prolongement et la contre-butée permettent une rotation de la goupille selon environ 180°.

10. Dispositif de fixation selon la revendication 8 ou 9, caractérisé en ce que le prolongement est une saillie en forme d'ergot (8) qui est disposée dans un creux en forme de secteur d'une partie de retenue (12) en tôle ou en fonte de la ferrure.

11. Dispositif de fixation selon la revendication 8 à 10, caractérisé en ce que le prolongement est une zone de bord (36) concentrique à la tête (34), élargie en forme de secteur, dont les passages en forme de gradin (37, 38) vers le bord périphérique (35) de la tête forment les butées.

12. Dispositif de fixation selon la revendication 1, caractérisé en ce que les disques (30, 31) ont une section transversale trapézoidale.

13. Dispositif de fixation selon l'une des revendications précédentes, caractérisé en ce que les disques (16, 30, 31) ont sensiblement le même diamètre que les douilles ou inserts.

14. Dispositif de fixation selon l'une des revendications 8 à 13, caractérisé en ce que le disque, lors de l'application d'un côté du prolongement à une butée est aligné dans la direction axiale avec la douille et lors de l'application de l'autre côté du prolongement à l'autre butée est sorti radialement.

15. Dispositif de fixation selon l'une des revendications précédentes, caractérisé en ce que la goupille (21) est constituée de deux parties de tige (23, 24) d'un diamètre différent qui possèdent respectivement des parties de tige excentriques (25, 26) et en ce que les parties de tige (23, 24) traversent des perçages excentriques de pièces d'insertion annulaires (28, 29), et que les disques (30, 31) sont retenus sur les parties de tige excentriques (25, 26).

16. Dispositif de fixation selon l'une des revendications précédentes, caractérisé en ce que la tige, au lieu d'être reliée à une tête, est reliée à un levier (35) se trouvant au-dessus de l'alésage de fixation.

17. Dispositif de fixation selon la revendication 16, caractérisé en ce que le levier est constitué d'une partie de plaque (35, 35') qui, dans la position de fermeture, recouvre des parties de la ferrure, par exemple, un rebord de fixation (37), à arêtes égales.

18. Dispositif de fixation selon l'une des revendications précédentes, caractérisé en ce que la douille (1) présente un rebord (3) qui est retenu d'une manière non tournante avec une saillie radiale dans un coin rabattu d'une partie de plaque (12) de la ferrure.

19. Dispositif de fixation selon l'une des revendications 1 à 7, caractérisé en ce que la partie de tige de la goupille logée dans la douille est pourvue d'un filetage qui s'engage d'une manière auto-taraudeuse dans la paroi de l'alésage de la douille ou qui est vissé dans un taraudage de la douille.

20. Dispositif de fixation selon la revendication 19, caractérisé en ce que deux douilles en forme de cheville sont reliées à une plaque inférieure sur laquelle est fixée une ferrure en forme de plaque, par exemple une plaque de montage, recouvrant la plaque inférieure au moins partiellement, qui présente deux trous oblongs traversés par les goupilles, avec une ligne médiane commune.

21. Dispositif de fixation selon la revendication 19 ou 20, caractérisé en ce que les douilles sont pourvues de saillies en forme de col s'appliquant par une liaison par force aux bords latéraux des trous oblongs.

22. Dispositif de fixation selon l'une des revendications 19 à 21, caractérisé en ce que la partie de tige de la goupille présentant le filetage, entre la tête et le disque, est plus longue selon environ la moitié du pas de filetage que la douille.

23. Dispositif de fixation selon le préambule de la revendication 1, caractérisé en ce que le trou traversant est ménagé d'une manière excentrique dans la douille, en ce que la goupille présente une partie de tige au côté de l'extrémité à laquelle est fixé un disque d'une manière excentrée et non tournante et en ce que les excentricités de la douille et de l'alésage du disque sont accordées l'une à l'autre de manière que le disque, dans une position de rotation de la goupille, est concentrique à la douille et, dans une autre position de rotation, fait saillie radialement sur la douille.

24. Dispositif de fixation selon la revendication 23, caractérisé en ce que la partie de tige de la goupille logée dans la douille présente un filetage qui s'engage d'une manière auto-taraudeuse dans la paroi de l'alésage de la douille ou qui est vissé dans un taraudage de la douille.

25. Dispositif de fixation selon la revendication 23 ou 24, caractérisé en ce que l'alésage de fixation de la ferrure est un trou oblong.

26. Dispositif de fixation selon les revendications 23 à 25, caractérisé en ce que le disque est pourvu d'au moins une arête coupante s'étendant tout autour.

27. Dispositif de fixation selon l'une des revendications 23 à 26, caractérisé en ce que le disque présente au moins un pas de filetage hélicoidal coupant.

28. Dispositif de fixation selon l'une des revendications 23 à 27, caractérisé en ce que la partie de tige côté extrémité a un plus petit diamètre que la partie de tige de la goupille logée dans la douille.

29. Dispositif de fixation selon l'une des revendications 23 à 28, caractérisé en ce que la partie de tige côté extrémité est assemblée par rivetage avec le disque.

30. Dispositif de fixation selon la revendication 29, caractérisé en ce que l'alésage du disque possède au moins au voisinage de la tête de rivet de la partie de tige un profil polygonal.

31. Dispositif de fixation selon l'une des revendications 23 à 30, caractérisé en ce que la partie côté extrémité de la douille est pourvue d'un prolongement axial dont les côtés forment des butées pour un prolongement radial de la goupille.

32. Dispositif de fixation selon la revendication 31, caractérisé en ce que les prolongements sont réalisés en forme de secteur.

33. Dispositif de fixation selon la revendication 31 ou 32, caractérisé en ce que le prolongement radial se trouve à la zone d'extrémité supérieure du disque.

34. Dispositif de fixation selon l'une des revendications 31 à 33, caractérisé en ce que les butées formées par les prolongements permettent une rotation de la goupille dans la douille selon environ 180°.

35. Dispositif de fixation selon l'une des revendications 23 à 34, caractérisé en ce que deux douilles en forme de cheville sont reliées à une plaque inférieure sur laquelle est fixée une ferrure en forme de plaque, par exemple une plaque de montage, recouvrant la plaque inférieure au moins partiellement qui présente deux trous oblongs traversés par les goupilles qui se situent sur une ligne médiane commune.

36. Dispositif de fixation selon l'une des revendications 23 à 35, caractérisé en ce que les douilles sont pourvues de saillies en forme de col s'appliquant par liaison par force aux bords latéraux des trous oblongs.

37. Dispositif de fixation selon l'une des revendications 23 à 36, caractérisé en ce que la partie de tige de la goupille présentant le filetage, entre la tête et le disque, est plus longue selon environ la moitié du pas de filetage que la douille.
